# EUROPEAN PATENT APPLICATION

(11) **EP 3 588 912 A1**
(43) Date of publication of application: **01.01.2020**
(21) Application number: 18180954.2
(22) Date of filing: 29.06.2018
(51) Int. Cl.: H04L 29/08, H04W 4/02, H04W 4/70, H04W 4/80

(54) **DEVICE AND METHOD FOR SHARING CONTEXT INFORMATION**

(71) Applicant: Koninklijke Philips N.V., 5656 AE Eindhoven (NL)
(72) Inventor: SHRUBSOLE, Paul Anthony, 5656 AE Eindhoven (NL); DE VREEDE, Jasper, 5656 AE Eindhoven (NL); GEURTS, Lucas Jacobus Franciscus, 5656 AE Eindhoven (NL)
(74) Representative: de Haan, Poul Erik

(57) **Abstract**

A device (110) is arranged for sharing context information indicative of features regarding an environment of the device. The device has a transceiver (111) arranged for communication across a network (130) and a processor (112) arranged to execute a sharing sequence. Context information is collected by sending a multitude of sharing request messages and receiving a multitude of sharing response messages, each message comprising anonymized context information. Estimated features are determined by statistically processing coherent features from the received anonymized context information, and are used as collected context information. At the other side, context information is provisioned upon receiving the sharing request message. Anonymized context information is determined by selecting either context information as obtained by the provisioning device itself or stored context information obtained from other devices via earlier sharing response messages. Then, a sharing response message is transmitted containing the anonymized context information.

## Description

### FIELD OF THE INVENTION

The invention relates to a device and methods for sharing context information via networked communication with other devices.

The present invention relates to the field of short-range communication systems, e.g. indoor communication by domestic devices connected to the internet, and more in particular provides devices and methods for sharing context information via a network, as well as corresponding computer program products. In this document, context information means information indicative of features regarding an environment of the device. Such features include measured values like temperature, humidity or lighting conditions, or detected or acquired features like proximity to other devices or acoustical properties of a room, but also settings such as configuration settings or time schedules, user preferences, location data, properties of a device, etc. Also, the word sharing requires two participating parties, a provisioning side transmitting context information and a collecting side receiving context information. So, sharing implies both collecting the context information from other devices or systems and provisioning the context information to other devices.

### BACKGROUND OF THE INVENTION

Recently everyday items and consumer devices get connected via a network such as the internet as part of the so-called Internet of Things (IoT). This opens up new ways of communication which could be used to make devices more aware of their context, e.g. interaction with, and impact on, their environment. Using the internet, sensors and programming, these devices may also become more autonomous. The more these devices therefore know about the context in which they operate, the better they can serve their customer. Examples of these devices are:
- Robotic vacuum cleaners that create a map of the room to optimize cleaning
- Audio devices that tune the sound to the room in which they play
- A thermostat that learns user's behavior and heat up times
- Health devices and air quality devices that adapt to their environment.
Such devices require easy adaptation, configuration or personalization to their environment and the users.

In such environments, communications networks are used to exchange messages among several interacting spatially-separated devices. Such devices may be the above domestic devices, or professional or industrial devices, and may be static or mobile. Networks may be classified according to geographic scope, which could be, for example, a metropolitan area, a local area, or a personal area, and may include wired or wireless links. Such networks may be designated respectively as a wide area network (WAN), metropolitan area network (MAN), local area network (LAN), wireless local area network (WLAN), or personal area network (PAN). The proposed enhancements in this document are applicable any type of device which is connected to any network, i.e. a device arranged for networked communication with other devices, although in this document examples mostly refer to the IoT and devices connected thereto.

Such IoT devices may each be configured to provide services. For example, a device may include hardware, such as a sensor, that is used to capture context data. An application running on the device may then use the captured data to perform an operation. In some cases, the captured context data may be useful to other devices in the network. The other devices in the network could include similar hardware so as to capture similar data. Alternatively, the device could provide these services (e.g., the captured context data) to the other devices in the wireless network. The device may inform the other devices in the wireless network of the services that the device provides by advertising this information over the network.

Device configuration is a very important feature for IoT devices, which are preferably arranged to perform configuration autonomously where possible, which may be called self-configuration. Configuring new, connected devices can take considerable time for a user. This becomes even more impractical when routines or schedules have to be created or when the device needs to be customized manually to its environment for the first time, such as an air purifier that needs to optimize power consumption and/or noise against air quality needs in a room or building. Furthermore, it can take quite some time before a smart device has learned about its environmental context and can adjust its programming. Known devices may obtain information from other devices in a closed system and may also exploit the availability of context information from a network environment.

Document WO2014/150868 describes sharing context information in a neighbor aware network. A context providing device may respond to a discovery query from a context consuming device and may tailor services it offers to the context consuming device based on the query. The context providing device may indicate in its response to a discovery query which services or local context information it can provide to the context consuming device.

### SUMMARY OF THE INVENTION

Although sharing context information clearly is advantageous, the owners of devices that transmit context information may not be willing to share some or even all the context information, e.g. for privacy reasons. So, although devices may benefit from receiving context information, users may object to transmitting and sharing their own data.

It is an object of the invention to provide devices and methods for sharing context information which take into account privacy considerations.

For this purpose, devices and methods for sharing context information are provided as defined in the appended claims. According to an aspect of the invention a device is provided as defined in claim 1. According to a further aspect of the invention there are provided methods as defined in claims 12 and 13. According to a further aspect of the invention there is provided a computer program product downloadable from a network and/or stored on a computer-readable medium and/or microprocessor-executable medium, the product comprising program code instructions for implementing the above method when executed on a computer.

The claimed features have the effect that context information is shared between various devices via network communication, without revealing which device originally had or obtained such context information. By receiving multiple instances of such context information, and subsequently statistically processing respective features from the anonymized context information, practically usable context information from devices in the neighborhood is derived.

Advantageously, the proposed sharing context information may enhance and accelerate configuration of a new device by obtaining context information that is already established nearby and approximating it to the environment where the device is placed. Privacy is maintained by anonymizing and statistical obfuscation of transmitted data. The approximation may further use the principle of coherence: data from sensors that are closer to the device are more similar in their environmental context than data that is further away. In practice, the Internet of Things infrastructure may be shared without losing privacy by anonymizing the context information that is exchanged with environments that are outside of the device's home network.

In the current context, the devices arranged for sharing context information with other devices may be any electronic device having the capability for communicating with one or more further devices via a network according to a suitable communication protocol, e.g. the Internet Protocol (IP). Within the context of this document the devices are considered to be peers, i.e. both being arranged for communicating according to said communication protocol without one of the devices initially having the role of a master, while each of the devices may be equipped for using wireless communication and may have an appropriate user interface. The device may be a substantially stationary device like a PC or a consumer device like an air purifier or a lighting appliance, but the device may also be a portable device like a laptop, a vacuum cleaner or a mobile device like a smartphone.

The device has a transceiver arranged for communication across a network and a processor arranged to execute a sharing sequence for sharing the context information. The sharing sequence is arranged for receiving context information and for transmitting context information.

For collecting context information, the sharing sequence involves sending a multitude of sharing request messages, each message comprising a request to provide context information. The sharing requests may be sent to one of more other devices, e.g. sequentially or distributed across a period of time. In response, a multitude of sharing response messages is received, each message comprising anonymized context information. Subsequently, at least one estimated feature may be determined by statistically processing respective features from the anonymized context information as received via said multitude of sharing response messages. When receiving sharing response messages from other devices, the received features should be statistically coherent to be used as input data for said statistical processing, e.g. the input data should represent a required aspect of the environment or received data may be pre-processed to determine such input data. Finally, the estimated feature is made available as the received context information.

Correspondingly, for provisioning of context information, the sharing sequence involves receiving a sharing request message, the message comprising a request to provide context information. Then, anonymized context information may be determined by selecting either context information as obtained by the device itself or stored context information obtained from other devices via earlier sharing response messages. Finally, a sharing response message is transmitted, the message comprising the determined anonymized context information.

In an embodiment the sharing sequence comprises, for provisioning context information, transmitting a second sharing request message, and receiving at least one second sharing response message, and storing the anonymized context information from the received sharing response message. The transmitting of the further sharing request message may be triggered upon receiving a sharing request message from a first device, but may also be executed earlier, e.g. in a preparatory phase. Advantageously, the device has now stored some context information that may be transmitted instead of sending its own context information.

In an embodiment the sharing sequence comprises, for collecting context information, transmitting said multitude of sharing request messages across a period of time, while said statistically processing comprises filtering the respective features from the anonymized context information as received across said period of time. Advantageously, by using context information that is gathered across a period of time, reliable context information is obtained.

A method according to the invention may be implemented on a computer as a computer implemented method, or in dedicated hardware, or in a combination of both. Executable code for a method according to the invention may be stored on a computer program product. Examples of computer program products include memory devices such as a memory stick, optical storage devices such as an optical disc, integrated circuits, servers, online software, etc. The computer program product may comprise non-transitory program code means stored on a computer readable medium for performing a method according to the invention when said program product is executed on a computer. In an embodiment, the computer program comprises computer program code means adapted to perform all the steps or stages of a method according to the invention when the computer program is run on a computer. Preferably, the computer program is embodied on a computer readable medium. There is provided a computer program product downloadable from a network and/or stored on a computer-readable medium and/or microprocessor-executable medium, the product comprising program code instructions for implementing a method as described above when executed on a computer.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

Further preferred embodiments of the devices and methods according to the invention are given in the appended claims, disclosure of which is incorporated herein by reference.

### BRIEF DESCRIPTION OF THE DRAWINGS

These and other aspects of the invention will be apparent from and elucidated further with reference to the embodiments described by way of example in the following description and with reference to the accompanying drawings, in which
Figure 1 shows devices arranged for networked communication and sharing context information,
Figure 2 shows a method for collecting context information,
Figure 3 shows a method for provisioning context information,
Figure 4 shows an example of processing of context information,
Figure 5a shows a computer readable medium, and
Figure 5b shows in a schematic representation of a processor system.

The figures are purely diagrammatic and not drawn to scale. In the Figures, elements which correspond to elements already described may have the same reference numerals.

### DETAILED DESCRIPTION OF EMBODIMENTS

The main elements in an enhanced system for sharing context information are as follows. The system may be used in an IoT enabled environment comprising devices with sensors and consumer devices that reside in a home network and are arranged communicate via a distributed ad-hoc network. An enhanced device is arranged to collect context information from provisioning devices. The collected context information is based on statistically coherent properties of received context information and may be applied for configuration of the new device. In order to prevent unwanted access to context data provisioned within a neighborhood, the method effectively statistically obfuscates the integrity of the data through partial re-transmits of request/response messages. For maintaining privacy of the owner of the context provisioning device, anonymized context information is transmitted and statistical processing is applied on the received anonymized context information, so as to provide short term obfuscation of the transmitted data. In practice, the obfuscation slows down converging to good quality context values but is still significantly faster than using a form of self-learning algorithm.

The enhanced system may comprise performing an initial exploitation of the new environment in which a device is placed, based on context information from other devices locally coupled on the network. In such an initial stage, the device may only collect relevant context information within and beyond its local network.

Relevant context data may be dependent on the type of device being introduced into a new environment, and may, for example, include temperature profiles throughout the day (with/without a heating system), the position or room where the device is located (e.g. living room, north wall), compass orientation of device/room, layout configuration of room (e.g. as abstracted from a camera), air quality in room at different times of day (windows open / closed), hours of sunshine (given occlusion from trees/buildings), etc.

The enhanced system may further comprise determining a context value along with a confidence value, and further sharing such values within a home/distributed network. The confidence value communicates to other devices how accurate, similar and established the contextual information is. Determining the confidence value may be based on:
- a distance, e.g. how far away the context provisioning device is from the collecting device. The distance may be an estimated physical (e.g. via signal strength or GPS coordinates), or may be expressed as a logical distance by a number of network hops or intermediate devices. The shorter the distance, e.g. fewer hops, the more likely the context is similar to the new device;
- a type and quality of a sensor in the provisioning device, and/or a measurement duration. For example, a historical context may be provided, e.g. a learnt pathway for a vacuum cleaner given a similar room layout;
- determining a level of similarity of the context between collecting and provisioning devices.

The enhanced system may further comprise requesting context information from more remote devices in a wider area if relevant context information is lacking locally, or if the confidence level of a certain value is too low on the local network. Such a more remote request essentially escalates collecting to a larger environment, e.g. other buildings or apartments within the vicinity.

Furthermore, the system may communicate with the user to show what contextual information was found, and may give the user the option to accept, adjust or reject the contextual information.

Practical examples of devices that may share context information as proposed are air purifiers sharing data on what time of day the air pollution and purifier power is highest, robot vacuum cleaners sharing the general room setup of a house, or lights and thermostats sharing schedules.

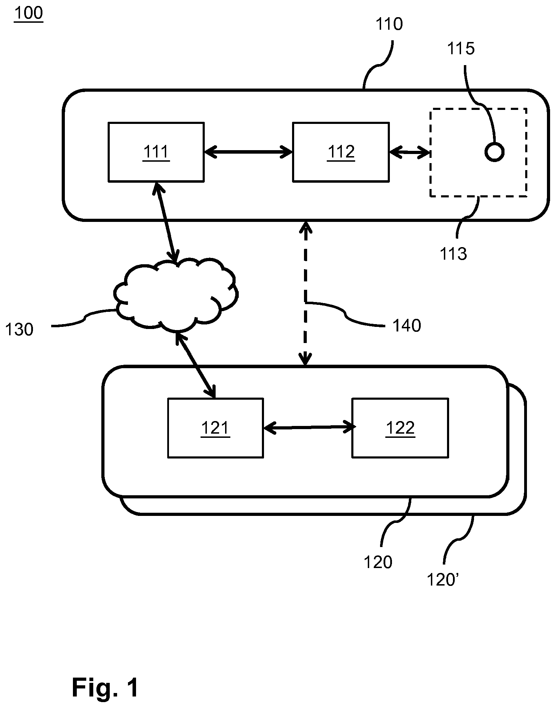

Figure 1 shows devices arranged for networked communication and sharing context information. In an environment 100, e.g. a consumer home, a building, a shop or an industrial site, various devices are shown that are arranged for network communication. The network is schematically indicated as a shape 130, and may, for example, be a home network comprising both wired and wireless connections, access points, routers, etc.

In said environment, a first device 110 and further devices 120, 120, which may be called second devices, are shown. The devices are physically apart at a distance 140. The further devices 120' are schematically indicated and are similar to the device 110, and are constituting peers with respect to the network communication. The device 110 has a transceiver 111 arranged for wired and/or wireless communication across a network and a processor 112 arranged to execute a sharing sequence for sharing context information. Likewise, each other device may have a transceiver 121 and a processor 122. Each device is equipped for network communication, as schematically indicated by said shape 130 and arrows coupled to the transceivers 111,121. The devices are arranged for network communication according to a communication protocol, which may define wired or wireless communication, e.g. Wi-Fi, Bluetooth or Ethernet, well known as such. An example of a network is described in reference [802.15.4], IEEE Standard for Local and metropolitan area networks, Part 15.4: Low-Rate Wireless Personal Area Networks.

In Figure 1, device 110 also may have a user interface 113 having user input and output elements. For example, the elements may comprise a display, a touch screen, various buttons, a mouse or touch pad, etc. Buttons may be traditional physical buttons, touch sensors, or virtual buttons, e.g. on a touch screen or icons to be activated via a mouse. The user interface may also be a remote user interface. Furthermore, the device may have one or more sensors 115 to sense parameters of the environment, such as a temperature sensor, a humidity sensor, a light detector, a GPS module to detect a geographical location, a camera to detect visual aspects, a microphone, etc. The sensors are coupled to a processor 112 for processing signals from the sensors to determine one or more of features of the environment, the features being indicative of environmental parameters like temperature or humidity, lighting conditions, physical position, presence of humans, location or dimensions of a room in which the device is positioned, sound levels or local audio characteristics, etc. In this document, such features regarding an environment of the device are called context information. Context information may also include parameters of human behavior (like a daily or weekly pattern of absence), or settings or preferences as entered by a user.

The processor 112 is arranged to execute a sharing sequence for sharing the context information. The sharing sequence involves a sequence of actions in at least two devices that participate is sharing, i.e. at one side a device collecting context information and at the other side one or more devices that provision the context information. Usually, devices will be arranged to perform both said collecting and said provisioning, but the processor may also be arranged to only collect or only provision context information, or to operate in various states providing only one or both functions, e.g. according to a user setting, a remote command or other conditions. So, optionally, the processor is arranged to execute a context request mode in which the sharing sequence is arranged to not provide context information but only to receive contact information; and a context provisioning mode in which the sharing sequence is arranged to provide context information upon receiving a sharing request message.

For example, after an initial mode of collecting context information the processor may execute a self-learn mode to enhance contextual values and/or improve confidence values. After an initial setup mode, the processor may continue to collect context information from the surrounding devices, but the processor may also start to obtain context information from its own sensors. This can be used to further tune the contextual values and increase the confidence value of the device itself.

The sharing sequence may, for collecting context information, include the following actions. Upon determining that context information of some nature is required, a multitude of sharing request messages are sent to at least one other device. Each sharing request message contains a request to provide context information. The message may include an indication of the type of context information that is required, or it may initiate a sharing protocol to first determine which sharing information is required and/or available. Subsequently, assuming that one or more further devices participate in the sharing sequence by provisioning context information, a multitude of sharing response messages may be received. Each sharing response message carries anonymized context information, as elucidated below. Upon receiving said multitude of response messages, the processor extracts the anonymized context information, and determines the nature of such information. If the nature corresponds to the required nature, at least one estimated feature is determined by statistically processing respective statistically coherent features from the anonymized context information as received via said multitude of sharing response messages. The received features may already be statistically coherent, e.g. provided by a similar or equal device, to be used as input data for said statistical processing, or may need some pre-processing to obtain coherent input data, e.g. normalized to a required range. Examples of such features are provided below. Finally, the estimated feature is made available as the collected context information to be used in the device, e.g. for adjusting a setting or function of the device.

Correspondingly, the sharing sequence, for provisioning context information, may include the following actions. First, a sharing request message is received from a further device that is requesting context information, as discussed above. The processor now determines anonymized context information by selecting either context information as obtained by the device itself or stored context information obtained from other devices via earlier sharing response messages. Effectively, the context information that is to be provisioned is now anonymous, as it may be either originate from the provisioning device itself, or from one or more other devices that have been involved in sharing earlier. Finally, a sharing response message is transmitted to the collecting side. The sharing response message contains the determined anonymized context information.

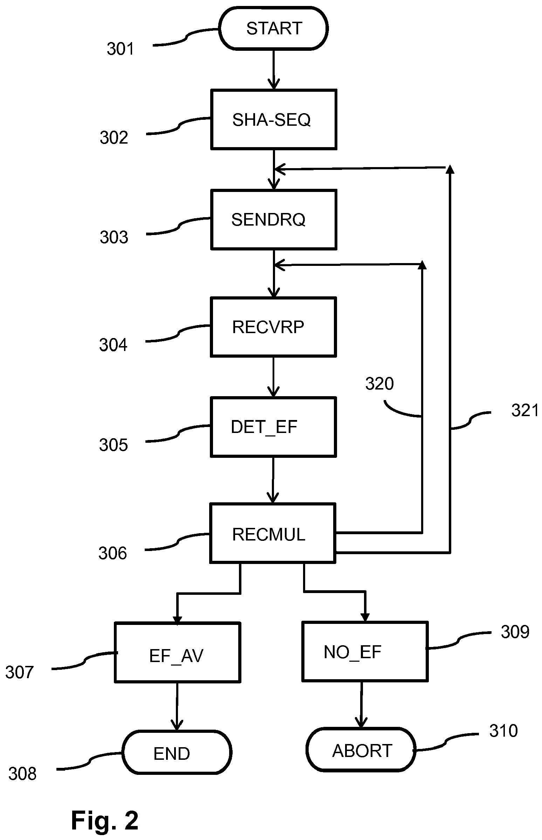

Figure 2 shows a method for collecting context information in a device arranged for communication across a network. The method starts at node START 301. In a first stage SHA SEQ 302 executing a sharing sequence is initiated for sharing context information between devices that are coupled to a network for exchanging data. The sharing sequence includes the following steps for collecting the context information indicative of features regarding an environment of the device. In stage SENDRQ 303 a multitude of sharing request messages is send to at least one other device. Each message defines a request to provide context information. The following stages are repeated as indicated by arrow 320 for receiving a multitude of sharing response messages. In stage RECVRP 304 a response message is received, the message containing anonymized context information. Next, in stage DET EF 305, at least one estimated feature is determined by statistically processing respective statistically coherent features from the anonymized context information as retrieved from said received sharing response message. In next stage RECMUL 306 it is decided whether sufficient response messages have been received to enable reliably determine a required type of context information. More response messages may be received as indicated by arrow 320. Also, if no further messages are received or if the quality of the received context information is too low, a further sharing request message may be sent, e.g. to different device further away, as indicated by an arrow 321. Next, upon determining that sufficient response messages have been received to enable reliably determining a required type of context information, in stage EF_AV 307 the estimated feature is made available as the collected context information, and the sharing sequence successfully ends at stage END 308. However, Next, upon determining that none or not sufficient response messages have been received to enable reliably determining a required type of context information, in stage NO_EF 309 no estimated feature is made available and an error message may be generated, e.g. proposing a user provide manual input regarding the environment, and the sharing sequence un successfully ends at stage ABORT 310.

In an embodiment, in the above method described with reference to Figure 2 or the processor 112 described with reference to Figure 1, the sharing sequence for collecting context information may include transmitting said multitude of sharing request messages across a period of time, and said statistically processing may involve filtering the respective statistically coherent features from the anonymized context information as received across said period of time. Effectively, a more reliable value for the estimated feature may be derived by applying a longer period of time. For more reliable context information, the user may be enabled to set the level of accuracy as needed via the user interface. For example, a slider may be presented, ranging from "quick and dirty" to "very accurate", which controls said period, i.e. sets the cut-off time used to statistically converge to a setting.

In a further embodiment, the sharing sequence may comprise, for collecting context information, determining a confidence level of the estimated feature. The confidence value may be based on a number of sharing response messages that has been statistically processed, Also, the confidence value may be based on a period of time over which the anonymized context information has been gathered. Also, the confidence value may be based on a confidence level as provided with the anonymized context information in said sharing response messages. Furthermore, the confidence value may be based on a similarity between the context of the device sending the sharing response message and the own context of the device itself. Optionally, the sharing sequence comprises determining distances from the device to respective originator devices that have originally obtained the respective statistically coherent features. Then, a confidence level of the estimated feature may be based on said distances.

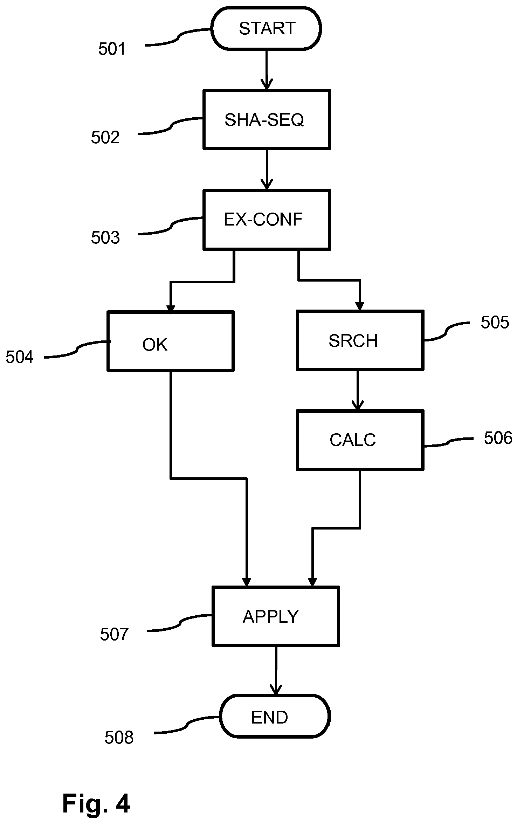

Also, in an embodiment the sharing sequence may comprise, for collecting context information, determining a confidence level of the estimated feature based on receiving a first multitude of sharing response messages. Then, upon determining that the confidence value is below the predetermined threshold, further sharing request messages are send, and a second multitude of sharing response messages is received and processed. Optionally, determining said confidence level is based on receiving the first multitude of sharing response messages from one or more first devices on a local network, and said further sharing request messages are send to second devices outside the local network so as to receive the second multitude of sharing response messages from the second devices, as elucidated with reference to Figure 4

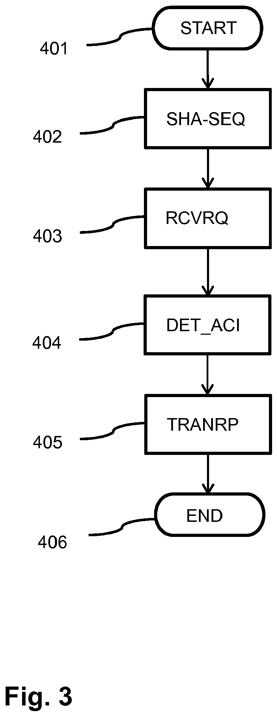

Figure 3 shows a method for provisioning context information in a device arranged for communication across a network. The method starts at node START 401. In a first stage SHA_SEQ 402 executing a sharing sequence is initiated for sharing context information between devices that are coupled to a network for exchanging data. The sharing sequence includes the following steps for provisioning the context information indicative of features regarding an environment of the device. In stage RCVRQ 403 a sharing request message is received from a further device. The message contains a request to provide context information as elucidated above with Figure 2. Next, in a stage DETACI 404 anonymized context information is determined by selecting either context information as obtained by the device itself or stored context information obtained from other devices via earlier sharing response messages. Next in stage TRANRP 405, a sharing response message is transmitted. The sharing response message includes the determined anonymized context information. The sharing sequence now successfully ends at stage END 406.

In an embodiment, in the above method described with reference to Figure 3 or the processor 112 described with reference to Figure 1, the sharing sequence for provisioning context information may include transmitting a further sharing request message to at least one second device. Subsequently, at least one second sharing response message from the second device may be received. Upon receiving one or more second sharing response messages, the anonymized context information from the received sharing response message(s) will be stored to be used as anonymized context information at a later stage.

In a further embodiment, the sharing sequence may comprise, for provisioning context information, the following. Upon receiving a sharing request message from a first device, a distance from the device to the first device is determined. Subsequently, in the sharing response message, a distance is included to provide an indication of relevance to a collecting side. The distance may either be the determined distance with context information as obtained by the device itself, or be a sum distance based on the determined distance and a stored distance with stored context information obtained from other devices.

Optionally, determining said distance may involve one or more of the following processes to a value indicative of the distance:
- determining a number of network links and/or network devices that are between the first device and the device itself;
- determining a signal strength of a wireless signal from the first device;
   or
- obtaining first location data of the first device, obtaining own location data of the device itself, and determining a physical distance based on the first location data and the own location data. Furthermore, said distance or sum distance may be indicative of a number of intermediate devices that have stored, and subsequently selected, the stored context information as the anonymized context information, in respective intermediate sharing response messages.

Figure 4 shows an example of processing of context information. In a first stage START 501, a new device is used for the first time by a user. As part of the device installation, the device is connected to a local network. The device may now automatically, or manually, be placed in a context-request mode. In a next stage SHA-SEQ 502, collecting context information from other devices may be executed as elucidated above. The device will now try to collect context information relevant to device on local network. The new device will search for contextual information on the local network which is already available from other devices. For example:
- A new air purifier is installed in the bedroom, while there is already an air purifier in the living room. The old purifier can provide the settings that are currently used.
- A robotic vacuum cleaner could use the time schedule of a smart thermostat to determine at what times the users are not home. These would be good times to vacuum if the users do not want to be disturbed.

In a next stage EX-CONF 503, during collecting the context information, a confidence value may be determined at the collecting side. Also, a confidence value may be calculated at the provisioning side and be included in the sharing response messages. The confidence value for the context information indicates how reliable the measured or provisioned value is, based on characteristics like the sensor accuracy and the time for which the measurements have been made. So, the confidence value may be determined based on, e.g., short range of the requesting devices detected through the received signal strength RSSi, or a good quality sensor, or self-learning completion. For example, a device that has been measuring the context for years will have far better information than a device that was installed a week ago. The new installed device may apply a minimum confidence threshold to determine whether to use the context value from the other devices.

In a stage OK 504, if determined confidence values are high and exceed a minimum required level, the device may use the received contextual values in the statistical processing to determine an estimated feature that is required. Then, in a stage APPLY 507, the collected context information is applied. Optionally, the user may be given the option to accept or decline the context information, or to further adjust a setting based on the context information. Also, the process may continue to further tune the contextual value as used, e.g. by self-learning. The sharing sequence subsequently ends at stage END 508.

Alternatively, if received or calculated confidences value are deemed too low, the processor may initiate a search in stage SRCH 505. For example, if there are several values received from several devices, but range of values is large, then an average value may be calculated but the confidence may be too low. Also, only a few responses may be received which are insufficient for said statistical processing. So, if insufficient context information is received, the device may search for further contextual information relevant to device in a wider neighborhood or across a longer period of time by repeating the sharing request messages. Also, if obtained confidence values are too low, the device may start searching for more information about the context in surrounding areas by sending additional sharing request messages to other devices further away.

Also, the collecting device may determine a similarity level of contextual information as received from respective provisioning devices. Since the environments might be different outside of the device's local network, confidence values may also be based on a degree of similarity of the context information provisioners environment. One useable heuristic may be that context providers which are further away, are less likely to be similar and thus, will have a lower confidence value to be adopted by the context requesting device. So, when searching for contextual information in the neighborhood via a broadcast sharing request message for a context value), it may be determined how similar the new device is compared to the provisioning devices and their local environments. For example, this can be done by looking at:
- Device category, brand and type number
- Distance between the device, measured by signal strength, GPS or amount of hops between devices, e.g. as elucidated below on how a hop count can be deduced.
- Orientation and address of devices. For example, devices in the same street and on the same side are likely to have more environmental similarity than a device which is also close by but in another street or in a different type of house.

Subsequently, in stage CALC 506, a most appropriate context value is calculated based on the above confidence and/or similarity values. This estimated feature value is made available as the collected context information to be applied in stage APPLY.

To avoid privacy issues, the transmitted context information is anonymized. For example, the context data may be extracted via the network by an unknown device or user for malicious purposes, e.g. to deduce the times when occupants are away in order to burgle the house. In order to mitigate this, the context provisioning devices forwards requests to other devices within range, as a broadcast request. Response messages contain anonymized context information, according to a statistical distribution with respect to its origin, the context value or a confidence value. The provisioning device may either send its own context data, or context data from another origin as stored earlier. Optionally, a varying context value and/or confidence value may be included in the response message that deviates from the available confidence value at the provisioning side. Thus, a context requesting device will not know the origin and/or the confidence value. So, the context value and/or confidence value may be unreliable unless the collecting side repeats the request for a sufficient period of time to statistically filter out the misleading context values. The statistical spread and time needed for filtering out the noisy requests can also be randomized and agreed up front within a neighborhood or apartment building.

The received anonymized context information may be processed as follows. An appropriate context value may be calculated based on similarity / confidence values as discussed above. For example, using the confidence values and values for all the devices that have been found in range, the new device may calculate an estimated context value.

In an ad-hoc network environment of devices between buildings or apartments, context requests and responses may be forwarded by devices that do not support sharing a requested context. Optionally, a context provisioning device may be arranged to proxy as a context collecting device until a context request is met, or until a time-out value is exceeded.

Optionally, a user interface may be arranged to provide options to a user to accept, decline, or adjust sharing the context information. For example, the context value and proposed functioning might not be in line with the preferences and opinion of the user. The device therefore may report to the user what the outcome of the initial sharing sequence is, so that the user can accept, decline or adjust the proposal based on the collected context information.

In an embodiment, a device determines that it is located in an apartment complex (e.g. by GPS and/or internet mapping data). With this knowledge, relevant context information that is transmitted from other devices with a strong signal strength are highly trusted because the environment in which it is placed is likely to be very similar.

In a further embodiment, a natural language processor is employed to process the received context information. This avoids a need for additional standardization in the communication protocol of devices already supporting existing IoT standards. an algorithm for accessing anonymized configuration data from multiple nodes within a neighborhood to self-configure (using e.g. 6 nodes distributed across multiple properties).

In a detailed embodiment, sharing context information may be implemented as follows. A new device, e.g. called node 3, is added to a network and is placed into a self-configuration mode by the user. A hop counter is initialized and is arranged to count a number of hops that is indicative of a distance. The device discovers a number of available network nodes in the network, e.g. node 2, node 4. Node 3 sends requests for configuration data to each of the discovered nodes, along with the hop counter.

In each provisioning device responding to the above request message, there is a randomizer to execute one of the following actions based on a pre-agreed probability distribution, only if the hop counter > 0:
a. Directly return its configuration status. In order to ensure anonymity of the responding nodes, the chances of directly returning configuration status will be made relatively small.
b. Delay a response message to the requesting device according to a random time based on same probability distribution.
c. Discover further devices and forward the request, while reducing the hop counter by 1. For example, Node 2 now discovers node 1, 6 and repeats the above actions of sending a sharing request and activating its randomizer. Similarly, Node 4 discovers node 5, 6 and repeats said actions.

After a period of time, based on the probability distribution, the new device will reconstruct statistically the required context information that is locally most relevant for it to use, using the anonymized data in the various responses.

The sharing of context information may be implemented, for example, in various practical applications.

In a device recommender app, a user moves into a new home and wants to know what new devices are most suitable for their home (lighting products, temperature control products, air quality products, security system devices (e.g. PIR sensors, cameras). The app discovers devices and contextual information configurations according to the algorithm above. After a few weeks, the app recommends a number of products (e.g. via Amazon) that are most suitable to the user's home.

In various consumer devices or applications, settings may be based on sharing context information according to the algorithm above. For example, existing device configurations and layout similarity / environmental similarity may be used for provisioning context information in the following consumer applications
- Air quality assessment - position of device and optimal usage mode to save energy
- Automated daylight and temperature control using similarities in environment on a street (e.g. shadows created from trees or other buildings)
- Router configurations to find out the right channel to use
- Robot vacuum cleaner in an apartment block can easily infer the correct room layout to navigate between rooms.

Many different ways of implementing the above methods are possible, as will be apparent to a person skilled in the art. For example, the order of the stages or steps can be varied or some stages may be executed in parallel. Moreover, in between steps other method steps may be inserted. The inserted steps may represent refinements of the method such as described herein or may be unrelated to the method.

Computer program products, downloadable from a network and/or stored on a computer-readable medium and/or microprocessor-executable medium, are provided that comprise program code instructions for implementing the above method, connection sequence, security process and further operations when executed on a computer device. So, the method according to the invention may be executed using software, which comprises instructions for causing a processor system to perform the respective method.

Typically, devices that interact to execute the sharing sequence, each comprise a processor coupled to a memory containing appropriate software code stored at the devices; for example, that software may have been downloaded and/or stored in a corresponding memory, e.g., a volatile memory such as RAM or a non-volatile memory such as Flash (not shown). The devices may for example be equipped with microprocessors and memories (not shown). Alternatively, the devices may, in whole or in part, be implemented in programmable logic, e.g., as field-programmable gate array (FPGA). The devices and server may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server. A method according to the invention may be executed using a bit stream arranged to configure programmable logic, e.g., a field-programmable gate array (FPGA), to perform the method. It will be appreciated that the software may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

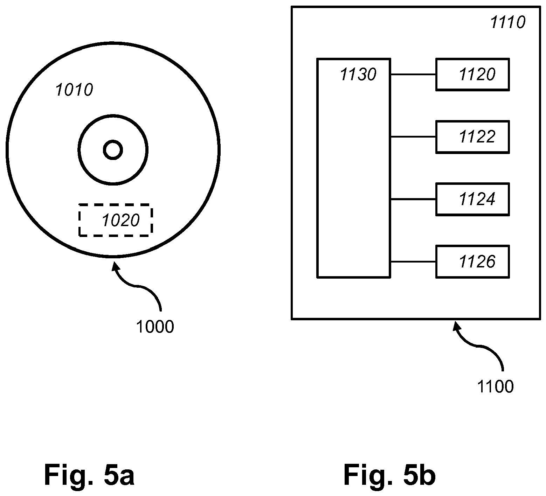

Figure 5a shows a computer readable medium 1000 having a writable part 1010 comprising a computer program 1020, the computer program 1020 comprising instructions for causing a processor system to perform one or more of the above methods and processes in the system as described with reference to Figures 1-3. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said methods.

Figure 5b shows in a schematic representation of a processor system 1100 according to an embodiment of the device or server as described with reference to Figures 1-4. The processor system may comprise a circuit 1110, for example one or more integrated circuits. The architecture of the circuit 1110 is schematically shown in the Figure. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for wired and/or wireless communication, using connectors and/or antennas, respectively.

It will be appreciated that, for clarity, the above description describes embodiments of the invention with reference to different functional units and processors. However, it will be apparent that any suitable distribution of functionality between different functional units or processors may be used without deviating from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization. The invention can be implemented in any suitable form including hardware, software, firmware or any combination of these.

It is noted that in this document the word 'comprising' does not exclude the presence of elements or steps other than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software, and a processor may fulfill the function of one or more units, possibly in cooperation with hardware elements. Further, the invention is not limited to the embodiments, and the invention lies in each and every novel feature or combination of features described above or recited in mutually different dependent claims.

In summary, a device is arranged for sharing context information indicative of features regarding an environment of the device. The device has a transceiver arranged for communication across a network and a processor arranged to execute a sharing sequence. Context information is collected by sending a multitude of sharing request messages and receiving a multitude of sharing response messages, each message comprising anonymized context information. Estimated features are determined by statistically processing coherent features from the received anonymized context information, and are used as collected context information. At the other side, context information is provisioned upon receiving the sharing request message. Anonymized context information is determined by selecting either context information as obtained by the provisioning device itself or stored context information obtained from other devices via earlier sharing response messages. Then, a sharing response message is transmitted containing the anonymized context information.

### Reference document:

[802.15.4] IEEE Standard for Local and metropolitan area networks - Part 15.4: Low-Rate Wireless Personal Area Networks (LR-WPANs), IEEE Std 802.15.4™-2011, (Revision of IEEE Std 802.15.4-2006)

## Claims

1. Device arranged for sharing context information with other devices, the context information being indicative of features regarding an environment of the device, the device (110) comprising
- a transceiver (111) arranged for communication across a network;
- a processor (112) arranged to execute a sharing sequence for sharing the context information,
the sharing sequence comprising, for collecting context information,
- sending a multitude of sharing request messages, each message comprising a request to provide context information,
- receiving a multitude of sharing response messages, each message comprising anonymized context information,
- determining at least one estimated feature by statistically processing respective features from the anonymized context information as received via said multitude of sharing response messages,
- making the estimated feature available as the collected context information,
and the sharing sequence comprising, for provisioning context information,
- receiving a sharing request message, the message comprising a request to provide context information,
- determining the anonymized context information by selecting either context information as obtained by the device itself or stored context information obtained from other devices via earlier sharing response messages,
- transmitting a sharing response message, the message comprising the determined anonymized context information.

2. Device as claimed in claim 1, wherein the sharing sequence comprises, for provisioning context information,
- transmitting a second sharing request message, and
- receiving at least one second sharing response message, and
- storing the anonymized context information from the received sharing response message.

3. Device as claimed in claim 1 or 2, wherein the sharing sequence comprises, for provisioning context information, upon receiving a sharing request message from a first device,
- determining a distance from the device to the first device, and
- including in the sharing response message
either the determined distance with context information as obtained by the device itself, or a sum distance based on the determined distance and a stored distance with stored context information obtained from other devices.

4. Device as claimed in claim 3, wherein determining said distance comprises at least one of
a) obtaining a number of network links and/or network devices that are between the first device and the device itself;
b) determining a signal strength of a wireless signal from the first device;
or
c) obtaining first location data of the first device, obtaining own location data of the device itself, and determining a physical distance based on the first location data and the own location data.

5. Device as claimed in claim 3 or 4, wherein said distance or sum distance is indicative of a number of intermediate devices that have stored, and subsequently selected, the stored context information as the anonymized context information, in respective intermediate sharing response messages.

6. Device as claimed in any of the preceding claims, wherein
the sharing sequence comprises, for collecting context information,
- transmitting said multitude of sharing request messages across a period of time, and
- said statistically processing comprising filtering the respective features from the anonymized context information as received across said period of time.

7. Device as claimed in any of the preceding claims, wherein
the sharing sequence comprises, for collecting context information, determining a confidence level of the estimated feature based on at least one of
- a number of sharing response messages that has been statistically processed;
- a period of time over which the anonymized context information has been gathered;
- a confidence level as provided with the anonymized context information in said sharing response messages;
- a similarity between the context of the device sending the sharing response message and the own context of the device itself.

8. Device as claimed in any of the preceding claims, wherein
the sharing sequence comprises, for collecting context information,
- determining distances from the device to respective originator devices that have originally obtained the respective features, and
- determining a confidence level of the estimated feature based on said distances.

9. Device as claimed in any of the preceding claims, wherein
the sharing sequence comprises, for collecting context information, determining a confidence level of the estimated feature based on receiving a first multitude of sharing response messages, and
upon determining that the confidence value is below the predetermined threshold, sending further sharing request messages and receiving a second multitude of sharing response messages.

10. Device as claimed in claim 9, wherein
determining said confidence level is based on receiving the first multitude of sharing response messages from one or more first devices on a local network, and
said further sharing request messages are sent to second devices outside the local network so as to receive the second multitude of sharing response messages from the second devices.

11. Device as claimed in any of the preceding claims, wherein
the processor is arranged to execute
- a context request mode in which the sharing sequence is arranged to not provide context information but only to receive context information; and
- a context provisioning mode in which the sharing sequence is arranged to provide context information upon receiving a sharing request message.

12. Method for collecting context information in a device arranged for communication across a network,
the context information being indicative of features regarding an environment of the device, the method comprising
- sending a multitude of sharing request messages, each message comprising a request to provide context information,
- receiving a multitude of sharing response messages, each message comprising anonymized context information,
- determining at least one estimated feature by statistically processing respective features from the anonymized context information as received via said multitude of sharing response messages,
- making the estimated feature available as the collected context information.

13. Method for provisioning context information in a device arranged for communication across a network,
the context information being indicative of features regarding an environment of the device, the method comprising
- receiving a sharing request message, the message comprising a request to provide context information,
- determining the anonymized context information by selecting either context information as obtained by the device itself or stored context information obtained from other devices via earlier sharing response messages,
- transmitting a sharing response message, the message comprising the determined anonymized context information.

14. Computer program product downloadable from a network and/or stored on a computer-readable medium and/or microprocessor-executable medium, the product comprising program code instructions for implementing a method according to claim 12 or 13 when executed on a computer.
